# EUROPÄISCHE PATENTANMELDUNG

(11) **EP 1 279 922 A2**
(43) Veröffentlichungstag der Anmeldung: **29.01.2003**
(21) Anmeldenummer: 02013031.6
(22) Anmeldetag: 13.06.2002
(51) Int. Cl.: G01B 11/02, G01D 5/34

(54) **Einrichtung zum Erfassen der Lage einer Kante eines Verarbeitungsgutes**

(30) Priorität: 28.07.2001 DE 10136874
(71) Anmelder: Koenig & Bauer Aktiengesellschaft, 97080 Würzburg (DE)
(72) Erfinder: Jentzsch, Arndt, 01640 Coswig (DE); Koch, Michael, 01462 Cossebaude (DE); Becker, Uwe, 01445 Radebeul (DE); Seefeld, Jörg, 01159 Dresden (DE)

(57) **Zusammenfassung**

Die Erfindung betrifft eine Einrichtung zum Erfassen der Lage einer Kante eines Verarbeitungsgutes, das einer Druckmaschine zugeführt wird, mit einer optoelektrischen Messeinrichtung, die aus einer Beleuchtungseinrichtung und einem eine Vielzahl nebeneinander angeordneter Messelemente aufweisenden Empfänger besteht.

Aufgabe der Erfindung ist es, eine Einrichtung zum Erfassen der Lage einer Kante eines Verarbeitungsgutes zu schaffen, die mit einem geringen Aufwand zu realisieren ist, wenig Bauraum beansprucht und dem Bogenlauf ideale Bedingungen bietet.

Erfindungsgemäß wird die Aufgabe dadurch gelöst, dass die optoelektrische Messeinrichtung als eine sich mindestens über einen Formatbereich (9) erstreckende Reflexzeile (10) ausgebildet ist.

## Beschreibung

Die Erfindung betrifft eine Einrichtung zum Erfassen der Lage einer Kante eines Verarbeitungsgutes, das einer Druckmaschine zugeführt wird, mit einer optoelektrischen Messeinrichtung, die aus einer Beleuchtungseinrichtung und einem eine Vielzahl nebeneinander angeordneter Messelemente aufweisenden Empfänger besteht.

Um in Druckmaschinen das Verarbeitungsgut lagegenau zuführen zu können, ist es erforderlich, seine Istlage zu erfassen und nachfolgend einer Solllage anzugleichen. Das Verarbeitungsgut kann dabei bahn- oder bogenförmig vorliegen, wobei dieses aus unterschiedlichen Materialien, wie z.B. Papier, Karton, Blech oder Folien usw. bestehen kann.

Aus der DE 195 32 009 C2 sind ein Verfahren und eine Vorrichtung zum Messen der Lage einer Kante von Bahnen oder Bogen mittels einer optoelektrischen Messeinrichtung bekannt. Die Messeinrichtung besteht aus einer Beleuchtungseinrichtung, die der einen Seite von den Bahnen oder Bogen zugeordnet ist, während auf der gegenüberliegenden Seite der Empfänger vorgesehen ist. Das von der Beleuchtungseinrichtung ausgehende Licht wird von dem Empfänger erfasst. Entsprechend der Lage der zu detektierenden Kante zwischen der Beleuchtungseinrichtung und dem Empfänger wird ein Istlagensignal generiert, das einer Verarbeitungselektronik zugeführt und dort mit einem Solllagensignal verglichen wird. Bei Abweichungen wird ein Stellsignal erzeugt, durch welches Stellmittel angesteuert werden zur Realisierung der Solllage.

In der Praxis werden diese optoelektrischen Messeinrichtungen als Kompaktgeräte verwendet, wobei in einem gabelförmigen Grundkörper auf der einen Seite die Beleuchtungseinrichtung und auf der gegenüberliegenden Seite der Empfänger angeordnet ist. Nachteilig ist, dass der gabelförmige Grundkörper innerhalb eines für eine Druckmaschine charakteristischen Formatbereichs verschoben werden muss. Dazu ist es erforderlich, z.B. in bogenverarbeitenden Druckmaschinen im die Bogen führenden Anlegtisch einen den gabelförmigen Grundkörper aufnehmenden Kanal vorzusehen, wodurch wiederum Mittel erforderlich sind, die diesen so abdecken, dass ein störungsfreier Bogenlauf bei der Verarbeitung der unterschiedlichen Bogenformate gesichert ist. Außerdem beansprucht die Messeinrichtung zusätzlichen Bauraum. Es ist auch möglich, die Beleuchtungseinrichtung und den Empfänger separat auszubilden und z.B. den Empfänger in einem sich über den Formatbereich erstreckenden Kanal verschiebbar zu installieren sowie den Kanal mit einem durchsichtigen, mit der Oberfläche des Anlegtischs vergleichenden Material abzudecken.

In einem Abstand über dem Kanal wird die Beleuchtungseinrichtung verschiebbar an einer sich über die Breite des Anlegtischs erstreckenden Traverse angeordnet und so die Lage einer zwischen Beleuchtungseinrichtung und Empfänger befindlichen Kante detektiert. Diese Anordnung hat den Nachteil, dass die Zuordnung Beleuchtungseinrichtung/Empfänger sowie die Justierung aufwändig und problembehaftet ist. Außerdem wird durch die Traverse zusätzlich Bauraum beansprucht.

Aufgabe der Erfindung ist es, eine Einrichtung zum Erfassen der Lage einer Kante eines Verarbeitungsgutes zu schaffen, die mit einem geringen Aufwand zu realisieren ist, wenig Bauraum beansprucht und dem Bogenlauf ideale Bedingungen bietet.

Erfindungsgemäß wird die Aufgabe durch die Merkmale des Anspruchs 1 gelöst.

Durch die erfindungsgemäße Lösung ist es möglich, auf eine einfache Weise die Lage einer Kante von Verarbeitungsgut zu detektieren, wobei die Einrichtung sich durch einen geringen Raumbedarf auszeichnet.

An einem Ausführungsbeispiel wird die Erfindung näher erläutert. In den zugehörigen Zeichnungen zeigen
- Fig. 1: eine Draufsicht auf eine schematische Darstellung eines Anlegtischs mit einem bogenförmigen Verarbeitungsgut und einer die Lage einer Kante erfassenden Einrichtung
- Fig. 2: eine Schnittdarstellung gemäß der Linie A-A in Fig. 1.

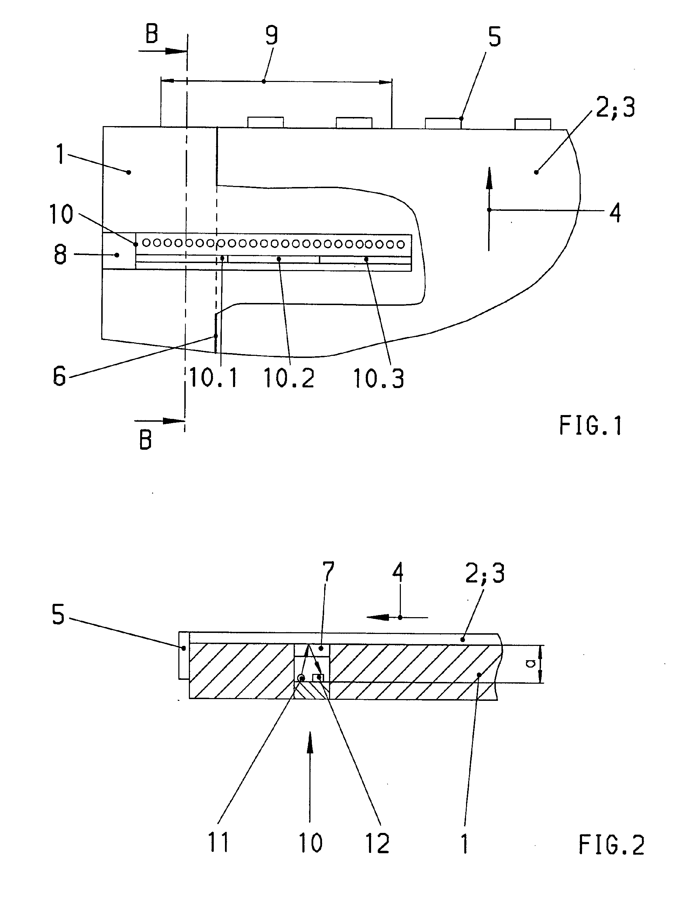

In Figur 1 ist ein Anlegtisch 1 dargestellt. Auf dem Anlegtisch 1 befindet sich ein Verarbeitungsgut 2, das als Bogen 3 ausgebildet ist. Das Verarbeitungsgut 2 liegt mit seiner Vorderkante, die Förderrichtung des Verarbeitungsgutes ist mit dem Bezugszeichen 4 versehen, an Vordermarken 5 an. Vom Verarbeitungsgut 2, das im Ausführungsbeispiel als Bogen 3 ausgebildet ist, wobei es aber grundsätzlich möglich ist, das Verarbeitungsgut 2 auch als Bahn auszubilden, soll die Lage der Kante 6 erfasst werden. Dazu ist in einem Kanal 8, der sich quer zur Bogenförderrichtung 4 und mindestens über einen für die Maschine charakteristischen Formatbereich 9 erstreckt, eine Reflexzeile 10 vorgesehen. Die Reflexzeile 10 ist fest im Kanal 8 installiert und erstreckt sich mindestens über den Formatbereich 9.

Damit wird sichergestellt, dass die Kante 6 des innerhalb des Formatbereichs 9 anfallenden Verarbeitungsgutes 2 erfasst wird.
Der Kanal 8 ist mit einem durchsichtigen Abdeckstreifen 7 verschlossen, so dass die Oberfläche des Anlegtischs 1 und des Abdeckstreifens 7 eine gemeinsame Ebene bilden.
Die Reflexzeile 10 besteht aus einer sich über die gesamte Länge erstreckenden Beleuchtungseinrichtung 11 und einem sich etwa in gleicher Ebene, auf einer benachbarten, zur Beleuchtungseinrichtung parallelen Position befindenden und sich ebenfalls über die gesamte Länge erstreckenden Empfänger 12. Der Empfänger 12 kann aus einzelnen, hintereinander geschalteten CCD-Elementen 12.1, 12.2, 12.3 oder als eine sich über mindestens die gesamte Formatbreite 9 erstreckende Scannerzeile 13 ausgebildet sein. Scannerzeilen 13 sind an sich bekannt, z.B. aus Flachbettscannern. Die CCD-Elemente 12.1, 12.2, 12.3 bestehen ihrerseits aus einer Vielzahl von in einer Reihe nebeneinander angeordneten Messelementen.
Die Beleuchtungseinrichtung 11 und der Empfänger 12 sind in einem Abstand a zum Verarbeitungsgut angeordnet. Die von der Beleuchtungseinrichtung 11 ausgesendeten Strahlen werden im vom Verarbeitungsgut 2 abgedeckten Bereich von der Unterseite des Verarbeitungsgutes 2 reflektiert und von den Messelementen des Empfängers 12 erfasst, während in dem Bereich, der nicht vom Verarbeitungsgut 2 abgedeckt ist, keine Reflexion der Strahlen der Beleuchtungseinrichtung 11 erfolgt, so dass sich die Lage der Kante 6 auf dem Empfänger 12 abbildet, durch den ein Istsignal generiert wird, welches einer Verarbeitungselektronik zugeführt wird. In der Verarbeitungselektronik wird das Istsignal mit einem in der Verarbeitungselektronik abgelegten Sollsignal verglichen und bei einer Abweichung ein Stellsignal generiert, das Stellelementen zum Verbringen der Kante 6 des Verarbeitungsgutes in die Sollposition zugeführt wird.

### Aufstellung der verwendeten Bezugszeichen

- 1: Anlegtisch
- 2: Verarbeitungsgut
- 3: Bogen
- 4: Förderrichtung
- 5: Vordermarke
- 6: Kante
- 7: Abdeckstreifen
- 8: Kanal
- 9: Formatbereich
- 10: Reflexzeile
- 11: Beleuchtungseinrichtung
- 12: Empfänger
- 12.1: Element
- 12.2: Element
- 12.3: Element
- 13: Scannerzeile

- a: Abstand

## Patentansprüche

1. Einrichtung zum Erfassen der Lage einer Kante eines Verarbeitungsgutes, das einer Druckmaschine zugeführt wird, mit einer optoelektrischen Messeinrichtung, die aus einer Beleuchtungseinrichtung und einem eine Vielzahl nebeneinander angeordneter Messelemente aufweisenden Empfänger besteht, **dadurch gekennzeichnet, dass** die optoelektrische Messeinrichtung als eine sich mindestens über einen Formatbereich (9) erstreckende Reflexzeile (10) ausgebildet ist.

2. Einrichtung nach Anspruch 1, **dadurch gekennzeichnet, dass** die Reflexzeile (10) als Scannerzeile (13) ausgebildet ist.

3. Einrichtung nach Anspruch 1, **dadurch gekennzeichnet, dass** die Beleuchtungseinrichtung (11) und der Empfänger (12) in einer Ebene angeordnet sind.

4. Einrichtung nach Anspruch 1, **dadurch gekennzeichnet, dass** die Reflexzeile (10) in einem Abstand (a) zur Oberfläche eines Anlegtischs (1) angeordnet ist.

5. Einrichtung nach Anspruch 1, **dadurch gekennzeichnet, dass** die Reflexzeile (10) in einem Kanal (8) des Anlegtischs (1) angeordnet ist.

6. Einrichtung nach Anspruch 1 und 5, **dadurch gekennzeichnet, dass** sich der Kanal (8) quer zu einer Förderrichtung (4) erstreckt.

7. Einrichtung nach Anspruch 1 und 5, **dadurch gekennzeichnet, dass** der Kanal (8) mit einem durchsichtigen, mit der Oberfläche des Anlegtischs(1) eine Ebene bildenden Abdeckstreifen (7) verschlossen ist.

8. Einrichtung nach Anspruch 1 und 3, **dadurch gekennzeichnet, dass** der Empfänger (12) als CCD-Zeile ausgebildet ist.

9. Einrichtung nach Anspruch 1, 3 und 8, **dadurch gekennzeichnet, dass** der Empfänger (12) aus hintereinander geschalteten Elementen (12.1, 12.2, 12.3) besteht.

10. Einrichtung nach Anspruch 1, 3 und 4, **dadurch gekennzeichnet, dass** vom Empfänger (12) die vom Verarbeitungsgut (2) reflektierten Strahlen der Beleuchtungseinrichtung (11) erfasst werden.
